(19) Europäisches Patentamt
European Patent Office
Office européen des brevets

(11) **EP 1 748 612 A1**

(12) **EUROPEAN PATENT APPLICATION**

(43) Date of publication:
**31.01.2007 Bulletin 2007/05**

(51) Int Cl.:
*H04L 27/26* (2006.01)     *H04L 25/02* (2006.01)

(21) Application number: **05291630.1**

(22) Date of filing: **29.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Mitsubishi Electric Information Technology Centre Europe B.V.**
**1119 NS  Schiphol Rijk (NL)**
• **MITSUBISHI DENKI KABUSHIKI KAISHA Chiyoda-ku Tokyo 100-8310 (JP)**

(72) Inventors:
• **Hara, Yoshitaka**
**c/o Mitsubishi Electric ITE 35708 Rennes cedex 7 (FR)**
• **Taira, Akinori**
**c/o Mitsubishi Electric ITE 35708 Rennes cedex 7 (FR)**

(74) Representative: **Maillet, Alain SCP Le Guen & Maillet, 5, Place Newquay, B.P. 70250 35802 Dinard Cedex (FR)**

(54) **OFDM pilot symbols structure using Hadamard codes**

(57)    The present invention concerns an orthogonal frequency division multiplexed signal representative of a frame which comprises at least a first and a second pilot symbols (404,405), the first pilot symbol (404) comprising a predetermined number of elements, each element modulating a subcarrier. The second pilot symbol (405) comprises the same number of elements of the first pilot symbol (404), and the first and second pilot symbols are different from each other. The invention concerns also a method and device for forming the signal and a method and device for estimating a communication channel.

The first and second pilot symbols are different Hadamard sequences modulating the subcarriers. This minimizes both the Inter Carrier Interference (ICI) and the Inter Symbol Interference (ISI) at the channel estimation stage.

Fig. 2

**Description**

The present invention relates generally to the field of Orthogonal Frequency Division Multiplexing (OFDM). More particularly, this invention relates to the use of pilot signals in an OFDM system to enhance error performance, particularly when the OFDM system is used in a wireless environment.

In OFDM communication systems, a high data rate stream of data is converted to a number of slower data rate streams that are transmitted in parallel simultaneously over a number of orthogonal subcarriers. Because the symbol duration increases for the lower rate parallel subcarriers frequencies, the relative dispersion in time caused by multipath delay spread is decreased.

In OFDM systems, intersymbol interference may be reduced or eliminated by the introduction of a guard interval of appropriate length over every OFDM symbol.

Some OFDM systems, as the one proposed in the standard IEEE 802.11a arranges data in packets. The PLCP (Physical Layer Convergence Procedure) preamble part of an IEEE 802.11 a frame comprises a first group of pilot symbols noted t1 to t10 and a second group of pilot symbols noted T1 and T2. Each pilot symbol of the first group is a short training symbol which modulate twelve OFDM subcarriers. Each pilot symbols of the second group are long training symbols, or block type pilot symbols, which modulate all subcarriers of one OFDM symbol.

This known pilot symbols are then received at the receiver device. The receiver device uses the short training symbols in order to perform the signal detection, the gain control, the diversity selection, the coarse frequency offset estimation and for synchronisation. The receiver device uses the long training symbols in order to perform the channel and fine frequency offset estimation.

When some multiple paths have excess path beyond the guard interval, or when there is no guard interval between pilot symbols, intersubcarrier interference (ICI) and intersymbol interference (ISI) arises from adjacent subcarriers and previous OFDM symbols respectively.

Such interferences generate, as example, at receiver side, inaccurate channel and fine frequency offset estimation.

The aim of the invention is therefore to propose methods, devices and signal which permits to reduce intersubcarrier interference and intersymbol interference (ISI) when multiple paths have excess path beyond the guard interval, or when there is no guard interval between pilot symbols.

To that end, the present invention concerns a method for forming an orthogonal frequency division multiplexed signal representative of a data frame, the method comprising the steps of obtaining a first pilot symbol comprising a predetermined number of elements, modulating subcarriers by the elements of the first pilot symbol. The method comprises further step of:

- obtaining a second pilot symbol different from the first pilot vector, the second pilot symbol comprising the same number of elements of the first pilot symbol,
- modulating the subcarriers by the elements of the second pilot symbol,
- forming an orthogonal frequency division multiplexed signal,
- transferring the orthogonal frequency division multiplexed signal.

The present invention concerns also a device for forming an orthogonal frequency division multiplexed signal representative a data frame, the device comprising means for obtaining a first pilot symbol comprising a predetermined number of elements, means for modulating subcarriers by the elements of the first pilot symbol. The device is characterised in that it comprises:

- means for obtaining a second pilot symbol different from the first pilot vector, the second pilot symbol comprising the same number of elements of the first pilot symbol,
- means for modulating the subcarriers by the elements of the second pilot symbol,
- means for forming an orthogonal frequency division multiplexed signal,
- means for transferring the orthogonal frequency division multiplexed signal.

Thus, intersubcarrier interference and intersymbol interference are reduced.

According to a particular feature, at least some elements of the first and the second pilot symbols modulating adjacent subcarriers are orthogonal.

Thus, intersubcarrier interference and intersymbol interference are reduced at lot.

According to a particular feature, the elements of the first and second pilot symbols are elements of different lines or columns of a Hadamard matrix.

Thus, intersubcarrier interference and intersymbol interference are reduced at lot.

According to a particular feature, the elements of the first and second pilot symbols are elements of different pseudo random sequences.

According to a particular feature, the frame comprises a preamble part and a payload part, the preamble part comprises a channel estimation field and the least first pilot and second pilot symbols are comprised in the channel estimation field.

Thus, by using pilot symbols different from each other in a channel estimation field, the channel estimation is less sensitive to intersubcarrier interference and intersymbol interference.

According to a particular feature, the at least first and second pilot symbols are consecutive symbols in the frame.

Thus, intersubcarrier interference and intersymbol interference coming from previous symbol are reduced.

According to a particular feature, the at least first and second pilot symbols are separated by a guard time interval.

Thus, intersymbol interference coming from a previous pilot symbol is reduced.

The present invention concerns also a method for estimating a communication channel through which is received an orthogonal frequency division multiplexed signal representative of a frame, the frame comprising at least a first and a second pilot symbols, the first and the second pilot symbols comprising a predetermined number of elements, each element modulating a subcarrier. The method comprises the steps of :

- obtaining a first reference pilot symbol comprising the predetermined number of elements,
- obtaining a second reference pilot symbol different from the first pilot vector, the second pilot symbol comprising the same number of elements of the first pilot symbol,
- retrieving the first and the second pilot symbols comprised in the received orthogonal frequency division multiplexed signal,
- estimating the communication channel by comparing the retrieved pilot symbols and the obtained reference pilot symbols.

The present invention concerns also a device for estimating a communication channel through which is received an orthogonal frequency division multiplexed signal representative of a frame, the frame comprising at least a first and a second pilot symbols, the first and the second pilot symbols comprising a predetermined number of elements, each element modulating a subcarrier. The device is characterised in that it comprises :

- means for obtaining a first reference pilot symbol comprising the predetermined number of elements,
- mean for obtaining a second reference pilot symbol different from the first pilot vector, the second pilot symbol comprising the same number of elements of the first pilot symbol,
- means for retrieving the first and the second pilot symbols comprised in the received orthogonal frequency division multiplexed signal,
- means for estimating the communication channel by comparing the retrieved pilot symbols and the obtained reference pilot symbols.

The present invention concerns also an orthogonal frequency division multiplexed signal representative of a frame which comprises at least a first and a second pilot symbols, the first pilot symbol comprising a predetermined number of elements, each element modulating a subcarrier, characterised in that the second pilot symbol comprises the same number of elements of the first pilot symbol, and the first and second pilot symbols are different from each other.

Since the features and advantages relating to the signal are the same as those set out above related to the method and device according to the invention, they will not be repeated here.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the method and device according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of the OFDM system according to the present invention ;

Fig. 2 is an algorithm executed by a transmission device for forming a frame comprising different pilot symbols, and for transferring the OFDM signal representative of the frame ;

Fig. 3 is algorithm executed by a reception device for selecting different pilot symbols and estimating the OFDM channel according to the present invention ;

Figs. 4a, 4b and 4c arc examples of frames comprising pilot symbols according to the present invention which are transferred in the OFDM system ;

Fig. 5 discloses some curves of measurements of the averaged means square error performance that is the squared error between estimated and real channel response when multiple paths have excess path beyond an effective symbol duration.

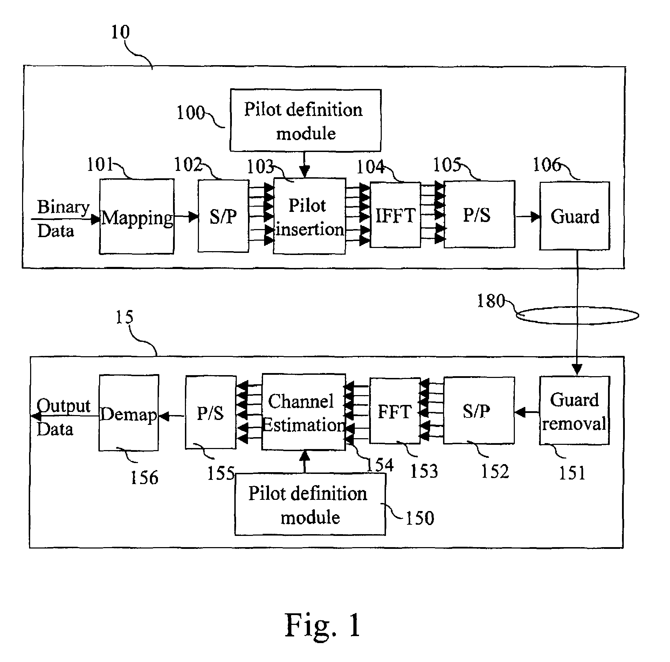

**Fig. 1** is a diagram representing the architecture of the OFDM system according to the present invention.

In the system described in the Fig. 1, a transmission device 10 transfers data under the form of frames to a reception device 15 through a communication channel 180.

The transmission device 10 comprises mapping unit 101, a serial/parallel converter 102, a pilot signal insertion unit 103, a pilot symbol definition module 100, an IFFT unit 104 (Inverse Fast Fourier Transform), a parallel/serial converter 105, and a guard time interval insertion unit 106.

The binary data are preferably encoded using an error correction code. The mapping unit 101 performs, for example, a QPSK (Quadrature Phase Shift Keying) modulation.

The serial/parallel converter 102 converts the modulated serial signal into parallel data equivalent to the number of OFDM parallel subcarriers according to the number of parallel OFDM subcarriers.

The pilot insertion unit 103 inserts into the parallel data at least a first and a second pilot symbols in each frame. According to the invention, the first and the second pilot symbols are different from each other and comprise the same number of elements, each modulating a subcarrier.

The number of elements comprised in each pilot symbol is lower or equal to the number of OFDM subcarriers.

Preferably, and in a non limitative way, the pilot symbols are block type pilot symbols, i.e each subcarrier of the OFDM system used for data transmission is modulated by an element of the pilot symbols.

The pilot symbols to be inserted are transferred to the pilot insertion unit 103 by the pilot symbol definition module 100.

The pilot decision module 100 determines the pilot symbols to be inserted in a frame. The pilot decision module 100 determines different pilot symbols. A pilot symbol is different from another pilot symbol if at least one element of the pilot symbol modulating a subcarrier is different from the element of the other pilot symbol modulating the same subcarrier. As example, if a pilot symbol comprises three elements, a first pilot symbol is equal to **[1,1,1]**, the other pilot symbols is equal to **[1,-1,1]**

Some elements of the first and second pilot symbols modulating adjacent subcarriers are, according to a first mode of realization of the present invention, defined as orthogonal.

The pilot symbols comprise, according to a second mode of realization, elements of different lines or columns of a Hadamard matrix. The pilot symbols comprise, according to a third mode of realization, elements of different pseudo random sequences.

Each pilot symbol d(q) is composed of M elements of a sequence.

$d(q) = [d_1(q), d_2(q), ..., d_M(q)]^T$. Each of the elements modulates a subcarrier.

In a preferred mode of realization, the elements of each pilot symbol which are inserted according to the invention are memorized in a non volatile memory associated to the pilot decision module 100.

In a variant of realization, the elements of the pilot symbols are calculated by the pilot decision module 100 when needed.

The IFFT unit 104 performs an inverse Fourier transform.

The parallel/serial converter 105 converts the signal into a serial signal as a transmission signal in accordance with the time axis by maintaining the orthogonality of each subcarrier in accordance with the frequency axis.

Finally, the guard interval insertion module 106 provides a guard time interval period before and/or after some or all the OFDM symbols in order to reduce the intersymbol interferences. The orthogonal frequency division multiplexed signal is then transferred in the communication channel 180.

The communication channel 180 is a wireless communication channel or a wired communication channel like a power line communication channel.

The communication channel 180 comprises L paths and has an impulse response of the time-variant fading channel is modelled as : $h(t) = \sum_{l=0}^{L} a_l \delta(t - lT_s)$ where $a_1$ is the propagation coefficient of the 1-th path, $T_S$ is the sample duration.

The reception device 15 comprises a guard interval removal unit 151, a serial/parallel converter 152, an FFT unit 153, a channel estimation unit 154, a pilot symbol definition module 150, a parallel/serial converter 155, and a demapping unit 156.

The guard interval removal unit 151 removes the guard time intervals from the received signal.

The serial/parallel converter 152 converts the received signal as serial data into parallel. The serial/parallel converter 152 aggregates the signal equivalent to one OFDM symbol.

The FFT unit 153 Fourier transforms the signal equivalent to an effective symbol length to extract a signal for each subcarrier.

The FFT unit 153 converts the received waveform y(q) into subcarrier components Y(q) using a Fast Fourier Transform.

The received signal $Y_{m1}(q)$ of the $m_1$-th is decomposed as follow:

$$Y_{m1}(q) = f_{m1,m1}d_{m1}(q) + \sum_m f_{m1,m}d_m(q) + \sum_m g_{m1,m}d_m(q-1) + N_{m1}(q).$$

wherein $f_{m1,m1}d_{m1}(q)$ is the desired signal, $d_{m1}(q)$ is the element of the q-th pilot symbol transmitted in the m-th subcarrier,

$\sum_m f_{m1,m}d_m(q)$ is representative of the intersubcarrier interference intersymbol interference coming from the same time symbol, $\sum_m g_{m1,m}d_m(q-1)$ is representative of the intersymbol interference coming from another symbol, i.e the previous symbol, $N_{m1}(q)$ is representative of the noise, $f_{m1,m1}, f_{m1,m}$ are coefficient which are representative of the channel propagation conditions, the multipath delay. $g_{m1,m}$ is a coefficient which is representative of the channel propagation conditions, the multipath delay, and the operating carrier frequency for the previous symbol of the frame.

The channel estimation module 154 estimates the communication channel 100 by comparing the received pilot symbols and pilot symbols provided by the pilot symbol definition module 150. The pilot symbol definition module 150 defines the same pilot symbols as the one used by the pilot symbol definition module 100 of the transmission device 10.

The channel estimation module 154 uses each subcarrier component $Y_{m1}(q)$ in order to perform a channel estimation. The channel estimation module 154 is preferably decomposed into two units: a preliminary estimation unit and a secondary estimation unit. The primary estimation unit estimates the channel frequency responses of each subcarrier independently. The secondary estimation unit estimates the channel and linearly combines a block of the preliminary estimated values estimated by the primary estimation unit according to the correlation of the channel frequency responses at different subcarriers. The quality of the channel frequency responses estimation made during the primary estimation is then important as being used by the secondary estimation unit.

The prelimary estimation unit estimates the channel frequency response of the $m_1$-th subcarrier as follow :

$$\tilde{h}_{m1} = \frac{1}{q_0}\sum_{q=1}^{q_0}d^*_{m1}(q)Y_{m1}(q) = f_{m1,m1} + I^{(1)} + I^{(2)} + N'_{m1}$$

wherein * is the complex conjugate, $q_0$ is the number of pilot symbols,

$$I^{(1)} = \sum_{m=1,m\neq m1}^{M}f_{m1,m}\cdot\frac{1}{q_0}\sum_{q=1}^{q_0}d_m(q)d_{m1}(q)*$$

$$I^{(2)} = \sum_{m=1}^{M}g_{m1,m}\cdot\frac{1}{q_0}\sum_{q=1}^{q_0}d_m(q-1)d_{m1}(q)*$$

$$N'_{m1} = \frac{1}{q_0}\sum_{q=1}^{q_0}N_{m1}(q)d_{m1}(q)*$$

$f_{m1,m1}$ shows the channel frequency response of the desired signal, $I^{(1)}$ shows the interference from nearby subcarriers in the same pilot symbol, $I^{(2)}$ shows the interference from the previous OFDM symbol and $N'_{m1}$ is the noise component.

The formulation of $I^{(1)}$ and $I^{(2)}$ shows that they depend on the pilot symbols as far as they include correlation of the pilot symbols.

Thus, by selecting different pilot symbols, the present invention reduces the influence of the interference from nearby subcarriers in the same pilot symbol and interference from the previous OFDM symbol.

According to the first mode of realization of the present invention, in two adjacent subcarriers $m_1$, $m_2$, the pilot signal elements $d_m(q)$ are selected as orthogonal. Thus $\frac{1}{q_0}\sum_{q=1}^{q_0} d_{m2}(q)d_{m1}(q)^* = 0$.

The interference between adjacent subcarriers can then reduce to zero and $I^{(1)}$ is decreased.

According to the third mode of realization of the present invention, the elements of the pilot symbol $d_m(q)$ arc elements of a pseudo random sequence. In such case, the interference power $E\left[\left|I^{(1)} + I^{(2)}\right|^2\right]$ is inversely proportional to the number of pilot symbols $q_0$. So the interference between adjacent subcarriers can also be reduced.

The parallel/serial converter 155 convcrts the time-axis signal into the frequency-axis signal. The demapping unit 156 demodulates the signal according to the modulation used by the transmission device 10.

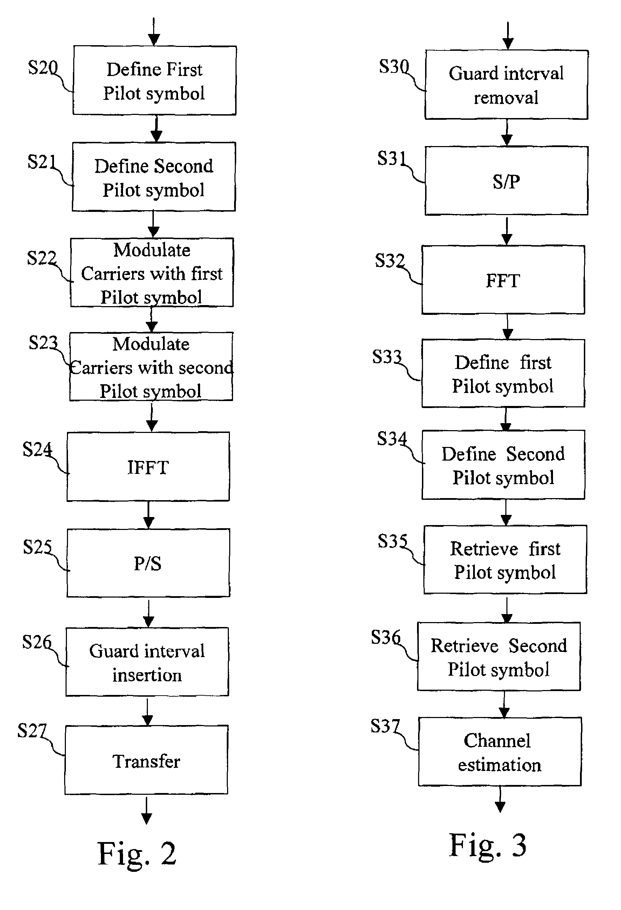

**Fig. 2** is an algorithm executed by a transmission device for forming a frame comprising different pilot symbols, and for transferring the OFDM signal representative of the frame.

At step S20, the pilot symbol definition module 100 selects a first pilot symbol to be inserted. The first pilot symbol comprises, according to the second mode of realization, elements of different lines or columns of a Hadamard matrix or, according to the third mode of realization, elements of a pseudo random sequence.

At step S21, the pilot symbol definition module 100 defines a second pilot symbol to be inserted. The second pilot symbol is different from the pilot symbol selected at step S20.

Some elements of the first and second pilot symbols modulating adjacent subcarriers are, according to a first mode of realization of the present invention, defined as orthogonal.

The pilot symbols comprise, according to the second mode of realization, elements of different lines or columns of a Hadamard matrix. The pilot symbols comprise, according to the third mode of realization, elements of different pseudo random sequences.

At step S22, each element of the first pilot symbol modulates an OFDM subcarrier.

At step S23, each element of the second pilot symbol modulates an OFDM subcarrier.

At step S24, an IFFT is performed.

At step S25, the signal is converted into a serial signal.

At step S26, guard time intervals periods are inserted in the serial signal before and/or after some or all the OFDM symbols.

At step S27 the OFDM signal is transferred to the reception device 15 through the communication channel.

It has to be noted here that, in a variant of realization, the first pilot symbol and be processed and transmitted first, and the second pilot signal is processed and transmitted after the process and the transmission of the first pilot symbol.

**Fig. 3** is algorithm executed by a reception device for selecting different pilot symbols and estimating the OFDM channel according to the present invention.

At step S30, the guard time intervals are removed from the received OFDM signal.

At step S31, the received OFDM signal is converted into parallel data for aggregation.

At step S32, a FFT transform is conducted in order to extract a signal for each subcarrier.

At step S33, the pilot symbol definition modules 150 defines a first reference pilot symbol. Such reference pilot symbol is the same as the first one defined at step S20. The reference pilot symbol comprises, according to the second mode of realization, elements of different lines or columns of a Hadamard matrix or, according to the third mode of realization, elements of a pseudo random sequence.

At step S34, the pilot symbol definition module 150 defines a second reference pilot symbol. That reference pilot symbol the same as the one selected at step S21 of the algorithm of the Fig. 2.

Some elements of the first and second reference pilot symbols modulating adjacent subcarriers are, according to a first mode of realization of the present invention, defined as orthogonal.

The reference pilot symbols comprise, according to the second mode of realization, elements of different lines or columns of a Hadamard matrix. The reference pilot symbols comprise, according to the third mode of realization, elements of different pseudo random sequences.

The elements of each reference pilot symbol which are defined according to the invention are memorized in a non volatile memory associated to the pilot decision module 150.

In a variant of realization, the elements of the pilot symbols are calculated by the pilot decision module 150 when needed.

At step S35, the first received pilot symbol is retrieved by the channel estimation module 154.

At step S36, the second received pilot symbol is retrieved by the channel estimation module 154.

At step S37, the channel estimation module 154 estimates the communication channel 100 by comparing the retrieved pilot symbols and the reference pilot symbols provided by the pilot symbol definition module 150. The pilot symbol definition module 150 uses the same reference pilot symbols as the one used by the pilot symbol definition module 100 of the transmission device 10.

The channel estimation module 154 uses each subcarrier component $Y_{m1}(q)$ in order to perform a channel estimation as disclosed above.

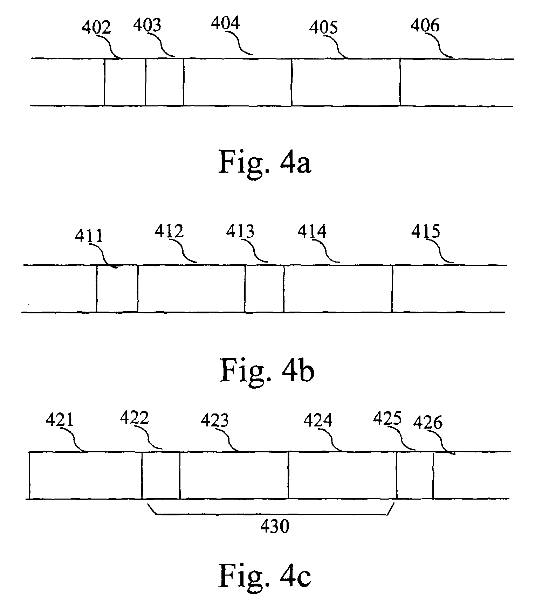

**Fig. 4a** is a first example of a frame comprising pilot symbols according to the present invention which is transferred in the OFDM system.

The frame shown in the example of the Fig. 4a and transmitted in the OFDM system comprises two guard time intervals 402 and 403 followed by a first and a second pilot symbols 404 and 405. The two pilot symbols 404 and 405 are consecutive and no guard time interval is inserted between them. Only two pilot symbols are represented in the Fig. 4a, but we can understand that are more important number of pilot signals according to the invention can be included into that frame.

The two pilot symbols 404 and 405 are followed by a payload 406 which comprises data.

**Fig. 4b** is a second example of a frame comprising pilot symbols according to the present invention which is transferred in the OFDM system.

The frame shown in the example of the Fig. 4b and transmitted in the OFDM system comprises a guard time interval 411 followed by a first pilot symbol 412. The first pilot symbol is followed by a second guard time interval 413 and a second pilot symbol 414 different from the first pilot symbol 412. The pilot symbol 414 is followed by a payload 415 which comprises data. Only two pilot symbols are represented in the Fig. 4b, but we can understand that are more important number of pilot symbols according to the invention can be included into that frame.

**Fig. 4c** is a third example of a frame comprising pilot symbols according to the present invention which is transferred in the OFDM system.

The frame shown in the example of the Fig. 4a and transmitted in the OFDM system is similar as the one disclosed in the IEEE standard 802.11a.

A frame of the IEEE 802.11a standard comprises a PLCP (Physical Layer Convergence Procedure) preamble.

The PLCP preamble comprises a field 421 which comprises ten short symbols. These symbols are used for the signal detection, the automatic gain control, the diversity selection, the coarse frequency offset estimation and the timing synchronisation.

The ten short symbols are followed by a channel estimation field 430.

The channel estimation filed comprises a guard time interval 422 and two long symbols 423 and 424.

The first long symbol 423 is followed by the second long symbol 424.

The present invention modifies the PLCP preamble by selecting different long symbols. According to the invention, the first and the second long symbols are the first and the second pilot symbols and are different from each other.

The first and second pilot symbols 423 and 424 are used by the receiving device 15 for a channel and fine frequency offset estimation.

The pilots symbols 423 and 425 a followed by a guard time internal 425 and a payload 426.

By selecting different first and second pilot symbols 423 and 424, the channel estimation is then made much more accurately than in the current IEEE 802.11a standard as it has been disclosed above.

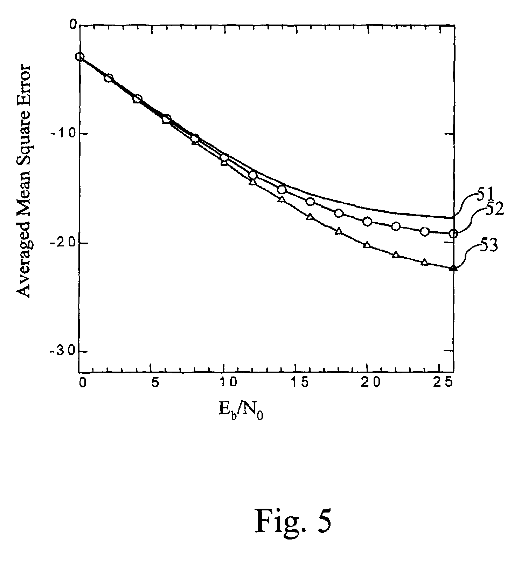

**Fig. 5** discloses some curves of measurements of the averaged means square error performance that is the squared error between estimated and real channel response when multiple paths have excess path beyond an effective symbol duration.

The Fig. 5 shows the Averaged Means Square Error which evolutes according to the signal power versus noise ratio in decibels.

The curves disclosed in the Fig. 5 are calculated when the multiple paths have excess path equals to 0.1 effective symbol duration.

The curve noted 51 shows simulation results when the same pilot symbols are inserted in a frame.

The curve 52 shows simulation results when two consecutive different pilot symbols are inserted in a frame. The elements of the two pilot symbols are elements of different pseudo random sequences.

The curve 53 shows simulation results when two consecutive different pilot symbols are inserted in a frame. Some elements of the pilot symbols modulating adjacent subcarriers are orthogonal.

It has to be noted here that, the present invention is disclosed when two pilot signals are comprised in a frame.

When more than two pilot symbols are comprised in a frame, all of these pilot symbols are different from each other or consecutive pilot symbols arc different from each other.

Naturally, many modifications can be made to the embodiments of the invention described above without departing from the scope of the present invention.

**Claims**

1. An orthogonal frequency division multiplexed signal representative of a frame which comprises at least a first and a second pilot symbols (404, 405, 423, 424), the first pilot symbol (404, 423) comprising a predetermined number of elements, each element modulating a subcarrier, **characterised in that** the second pilot symbol (405, 424) comprises the same number of elements of the first pilot symbol (404, 423), and the first and second pilot symbols are different from each other.

2. Signal according to claim 1, **characterised in that** at least some elements of the first (404, 423) and the second pilot symbols (405, 424) modulating adjacent subcarriers are different.

3. Signal according to claim 2, **characterised in that** the elements of the first and second pilot symbols are elements of different lines or columns of a Hadamard matrix.

4. Signal according to any of the claims 1 to 3, **characterised in that** the frame comprises a preamble part (421, 422, 423, 424) and a payload part (426) and **in that** the preamble part comprises a channel estimation field (430) and **in that** the least first pilot and second pilot symbols (423, 424) are comprised in the channel estimation field.

5. Signal according to claim 4, **characterised in that** the at least first and second pilot symbols (423, 424) are consecutive symbols in the frame.

6. Signal according to claim 5, **characterised in that** the at least first and second pilot symbols (412, 414) are separated by a guard time interval (413).

7. Method for forming an orthogonal frequency division multiplexed signal representative of a data frame, the method comprising the steps of :

   - obtaining (S20) a first pilot symbol comprising a predetermined number of elements,
   - modulating (S22) subcarriers by the elements of the first pilot symbol,

   **characterised in that** the method comprises further step of:

   - obtaining (S21) a second pilot symbol different from the first pilot vector, the second pilot symbol comprising the same number of elements of the first pilot symbol,
   - modulating (S23) the subcarriers by the elements of the second pilot symbol,
   - forming (S24, S25, S26) an orthogonal frequency division multiplexed signal,
   - transferring (S27) the orthogonal frequency division multiplexed signal.

8. Method according to claim 7, **characterised in that** at least some elements of the first and the second pilot symbols modulating adjacent subcarriers are different.

9. Method according to claim 8, **characterised in that** the elements of the first and second pilot symbols are elements of different lines or columns of a Hadamard matrix.

10. Method according to claim 7, **characterised in that** the elements of the first and second pilot symbols are elements of different pseudo random sequences.

11. Method according to any of the claims 7 to 10, **characterised in that** the frame comprises a preamble part and a payload part and **in that** the preamble part comprises a channel estimation field and **in that** the least first pilot and second pilot symbols are comprised in the channel estimation field.

12. Method according to claim 11, charactcriscd in that the at least first and second pilot symbols are consecutive symbols.

**13.** Method according to claim 11, **characterised in that** the method comprises the further step of inserting a guard time interval between the first and second pilot symbols.

**14.** Method for estimating a communication channel through which is received an orthogonal frequency division multiplexed signal representative of a frame, the frame comprising at least a first and a second pilot symbols, the first and the second pilot symbols comprising a predetermined number of elements, each element modulating a subcarrier, **characterised in that** the method comprises the steps of :

- obtaining a first reference pilot symbol (S33) comprising the predetermined number of elements,
- obtaining a second reference pilot symbol (S34) different from the first pilot vector, the second pilot symbol comprising the same number of elements of the first pilot symbol,
- retrieving (S35, S36) the first and the second pilot symbols comprised in the received orthogonal frequency division multiplexed signal,
- estimating (S37) the communication channel by comparing the retrieved pilot symbols and the obtained reference pilot symbols.

**15.** Device for forming an orthogonal frequency division multiplexed signal representative of a data frame, the device comprising:

- means (100) for obtaining a first pilot symbol comprising a predetermined number of elements,
- means (103) for modulating subcarriers by the elements of the first pilot symbol,

**characterised in that** the device comprises:

- means (100) for obtaining a second pilot symbol different from the first pilot vector, the second pilot symbol comprising the same number of elements of the first pilot symbol,
- means (103) for modulating the subcarriers by the elements of the second pilot symbol,
- means (104, 105, 106) for forming an orthogonal frequency division multiplexed signal,
- means for (106) transferring the orthogonal frequency division multiplexed signal.

**16.** Device (15) for estimating a communication channel through which is received an orthogonal frequency division multiplexed signal representative of a frame, the frame comprising at least a first and a second pilot symbols, the first and the second pilot symbols comprising a predetermined number of elements, each element modulating a subcarrier, **characterised in that** the device comprises :

- means (150) for obtaining a first reference pilot symbol comprising the predetermined number of elements,
- mean (150) for obtaining a second reference pilot symbol different from the first pilot vector, the second pilot symbol comprising the same number of elements of the first pilot symbol,
- means for retrieving (154) the first and the second pilot symbols comprised in the received orthogonal frequency division multiplexed signal,
- means for estimating (154) the communication channel by comparing the retrieved pilot symbols and the obtained reference pilot symbols.

10

Pilot definition
module

100

101    102    103         104    105         106

Binary
Data → Mapping → S/P → Pilot
insertion → IFFT → P/S → Guard

180

15

Output
Data ← Demap ← P/S ← Channel
Estimation ← FFT ← S/P ← Guard
removal

156    155         154    153    152    151

Pilot definition
module

150

Fig. 1

S20 — Define First Pilot symbol

S21 — Define Second Pilot symbol

S22 — Modulate Carriers with first Pilot symbol

S23 — Modulate Carriers with second Pilot symbol

S24 — IFFT

S25 — P/S

S26 — Guard interval insertion

S27 — Transfer

Fig. 2

S30 — Guard interval removal

S31 — S/P

S32 — FFT

S33 — Define first Pilot symbol

S34 — Define Second Pilot symbol

S35 — Retrieve first Pilot symbol

S36 — Retrieve Second Pilot symbol

S37 — Channel estimation

Fig. 3

402 403 404 405 406

## Fig. 4a

411 412 413 414 415

## Fig. 4b

421 422 423 424 425 426

430

## Fig. 4c

Fig. 5

| | European Patent Office | EUROPEAN SEARCH REPORT | Application Number<br>EP 05 29 1630 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | EP 1 467 508 A (FUJITSU LIMITED)<br>13 October 2004 (2004-10-13)<br>* figures 4,26a,27 *<br>* paragraphs [0004], [0005], [0013],<br>[0014] *<br>* paragraphs [0016], [0017] *<br>----- | 1-16 | H04L27/26<br>H04L25/02 |
| T | HSIAO-CHUN WU ET AL: "A new ICI matrices<br>estimation scheme using Hadamard sequence<br>for OFDM systems"<br>IEEE TRANSACTIONS ON BROADCASTING IEEE<br>USA,<br>vol. 51, no. 3, September 2005 (2005-09),<br>pages 305-314, XP002360623<br>Section III.B<br>----- | 1,7,<br>14-16 | |
| | | | TECHNICAL FIELDS<br>SEARCHED (IPC)<br><br>H04L |

The present search report has been drawn up for all claims

| Place of search | Date of completion of the search | Examiner |
|---|---|---|
| Berlin | 22 December 2005 | Chave, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                            
& : member of the same patent family, corresponding
    document

EPO FORM 1503 03.82 (P04C01)

EP 1 748 612 A1

## ANNEX TO THE EUROPEAN SEARCH REPORT
## ON EUROPEAN PATENT APPLICATION NO.

EP 05 29 1630

22-12-2005

| Patent document cited in search report | | Publication date | Patent family member(s) | | Publication date |
|---|---|---|---|---|---|
| EP 1467508 | A | 13-10-2004 | AU | 2002219573 A1 | 30-07-2003 |
| | | | WO | 03061170 A1 | 24-07-2003 |
| | | | US | 2004252629 A1 | 16-12-2004 |

EPO FORM P0459